(19) Europäisches Patentamt
European Patent Office
Office européen des brevets

(11) Veröffentlichungsnummer: **0 290 522 B1**

(12) # EUROPÄISCHE PATENTSCHRIFT

(45) Veröffentlichungstag der Patentschrift:
27.03.91 Patentblatt 91/13

(51) Int. Cl.$^5$: **G01N 27/00**

(21) Anmeldenummer: 87907408.6

(22) Anmeldetag: 24.11.87

(86) Internationale Anmeldenummer:
PCT/CH87/00157

(87) Internationale Veröffentlichungsnummer:
WO 88/04047 02.06.88 Gazette 88/12

(54) **VORRICHTUNG ZUR ERZEUGUNG UND DETEKTION VON MAGNETISCHEN MATERIALSTRUKTUREN IM BEREICH ATOMARER DIMENSIONEN.**

(30) Priorität: 24.11.86 CH 4686/86

(43) Veröffentlichungstag der Anmeldung:
17.11.88 Patentblatt 88/46

(45) Bekanntmachung des Hinweises auf die
Patenterteilung:
27.03.91 Patentblatt 91/13

(84) Benannte Vertragsstaaten:
AT BE CH DE FR GB IT LI LU NL SE

(56) Entgegenhaltungen:
EP-A- 0 195 349
FR-A- 2 545 611
Patent Abstracts of Japan, vol. 6, no. 18
(P-100)(896), 2 February 1982 & JP A 56142453

(73) Patentinhaber: LASARRAY HOLDING AG
CH-8512 Thundorf (CH)

(72) Erfinder: GUENTHERODT, Hans-Joachim
Weisskirchweg 13
CH-4108 Witterswil (CH)

Erfinder: GRUETTER, Peter
Schlettstadtstrasse 10
CH-4055 Basel (CH)
Erfinder: MEYER, Ernst
Institut für Physik der Universität Basel
Klingelbergstrasse 82 CH-4056 Basel (CH)
Erfinder: HEINZELMANN, Harald
Institut für Physik der Universität Basel
Klingelbergstrasse 82 CH-4056 Basel (CH)
Erfinder: WIESENDANGER, Roland
Eggenweg 15
W-7850 Lorrach (DE)
Erfinder: ROSENTHALER, Lukas
Reussstrasse 70
CH-4054 Basel (CH)
Erfinder: HIDBER, Hans, Rudolf
Thiersteinerstrasse 20/3
CH-6153 Reinach (CH)
Erfinder: GARCIA, Nico Autonome Universität
Madrid
Physik-Departement
Cantoblanco E-28049 Madrid (ES)

(74) Vertreter: Frauenknecht, Alois J. et al
c/o PPS Polyvalent Patent Service AG,
Mellingerstrasse 1
CH-5400 Baden (CH)

## Beschreibung

Die Erfindung betrifft eine Vorrichtung mit einer Tunnelmikroskop-Einrichtung zur rasterförmigen Abtastung einer Materialoberfläche durch eine Abtastspitze im Bereich atomarer Dimensionen, gemäss dem ersten Teil des Patentanspruchs 1. Ferner betrifft die Erfindung ein Verfahren zum Betrieb dieser Vorrichtung.

Anwendungsgebiete für die Vorrichtung und das Verfahren sind insbesondere Herstellung und Detektion von magnetischen Oberflächendomänen und von magnetischen oder magnetischen Wechselwirkungen zugänglichen Strukturen oder Mustern auf Materialoberflächen im atomaren Bereich, also in der Grössenordnung einiger Nanometer.

Eine koordinatengesteuerte Abtastung von Oberflächen im Nanometer-Bereich ist in Zusammenhang mit dem "Atomic Force Microscope" (AFM) zur Messung kleiner interatomarer Kräfte und zur Bestimmung der Oberflächentopographie von elektrisch isolierenden Proben bekannt (Physical Review Letters 56 (1986), 930). Eine Mess-Spitze aus Diamant, welche an einer kleinen Feder montiert ist, wird dabei rasterförmig über die zu untersuchende Oberfläche der Probe geführt. Durch Messen der Auslenkung der Feder mittels eines nachgeschalteten Tunnelmikroskops ergibt sich der Kraftverlauf zwischen der Spitze und der Probenoberfläche. Mit dieser Anordnung konnte z.B. eine laterale Auflösung von 3 nm erreicht werden.

Technische Anwendungen dieser Messeinrichtung wurden bisher im Bereich elektrischer oder mechanischer Wechselwirkungen gesucht. Die Mess-Spitze am vorderen Ende der erwähnten Feder bestand folglich aus elektrisch isolierendem oder gemäss einem anderen Vorschlag aus elektrisch leitendem Material, in jedem Fall aus nichtmagnetischem Material. Die im Rahmen der vorliegenden Erfindung angestrebte Nutzbarmachung magnetischer Effekte oder Wechselwirkungen sowie eine gezielte Beeinflussung der Materialstrukturen durch magnetische Effekte im atomaren Bereich war mit den bisher bekannten Mitteln nicht möglich.

Es ist Aufgabe der Erfindung, eine Vorrichtung bzw. ein Verfahren anzugeben, mit denen eine Erzeugung oder der Nachweis von magnetischen Materialstrukturen der geschilderten Art im Nanometerbereich möglich ist.

Diese Aufgabe wird erfindungsgemäss durch die Merkmale der Ansprüche 1 und 9 gelöst.

Der Vorteil der erfindungsgemässen Massnahmen liegt in der massiven Reduktion der Grössenordnungen, in denen magnetische Strukturen technisch herstellbar sind, sowie in der erheblichen Verbesserung des Auflösungsvermögens bei der Detektion magnetischer Bereiche auf Materialoberflächen. So liegt bei Verwendung eines magnetischen Kraftsensors der Bereich der lateralen Auflösung grössenordnungsmässig zwischen 0,1 und 100 nm. Damit lassen sich nicht nur magnetische Domänen an sich nachweisen oder erzeugen, sondern sogar der Bereich der Domänenwand nachweisen, der viel kleiner ist als der Durchmesser einer Domäne. Ein weiterer Vorteil liegt in der Möglichkeit, die gleiche mechanische Grundeinrichtung sowohl für die Erzeugung von magnetischen oder magnetisch beeinflussbaren Domänen als auch für die Messung, also den Nachweis solcher Materialstrukturen einsetzen zu können.

Bevorzugte technische Anwendungsgebiete sind unter anderem der Nachweis magnetischer Domänen oder Strukturen in atomarer Grösse im Rahmen der Materialprüfung bzw. Qualitätskontrolle metallischer oder metalloxidischer Bänder oder Folien, welche durch rasche Abschreckung direkt aus der Schmelze hergestellt wurden ("Rapidly Quenched Metals"). Zum Beispiel ist die Beobachtung derart kleiner magnetischer Strukturen für die Herstellung und laufende Qualitätssicherung neuer hartmagnetischer Werkstoffe, wie dem rasch abgeschreckten FeNdB, von erheblicher Bedeutung. Ferner lassen sich auch in einer Matrix kleine ferromagnetische Ausscheidungen im Nanometerbereich erkennen, wie sie zum Beispiel beim Kristallisieren von metallischen Gläsern auftreten.

Schliesslich lassen sich magnetische Domänen in Nanometerabmessungen gezielt in ferromagnetischen Strukturen herstellen und löschen. Damit ist es möglich, extrem miniaturisierte Informationsspeicher mit einer ausserordentlich grossen Speicherdichte zu schaffen.

Im folgenden werden Einzelheiten und Ausführungsbeispiele der Erfindung mit Hilfe der Zeichnung näher erläutet. Es zeigt :

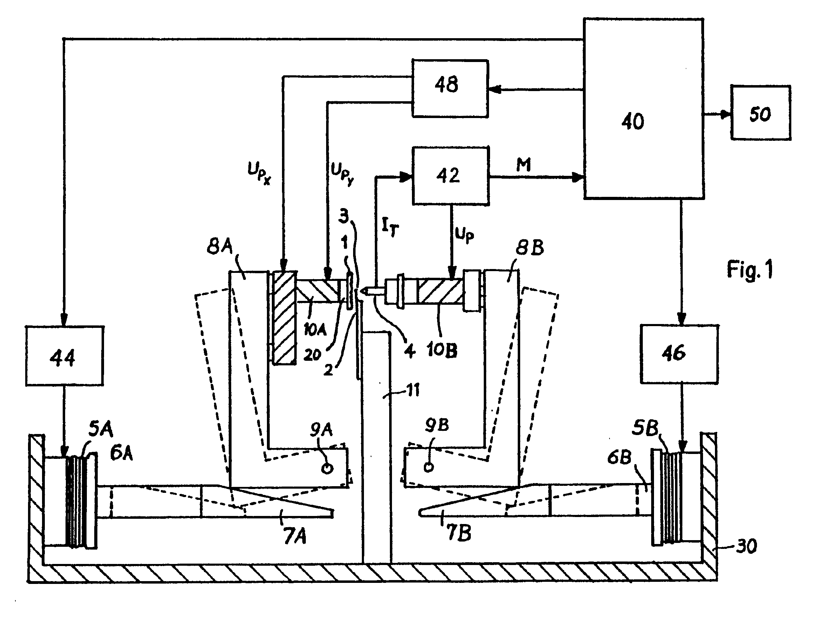

Fig.1 die schematische Darstellung einer Vorrichtung zur Erzeugung und zum Nachweis von magnetischen Materialstrukturen.

Das wesentliche Element für die Herstellung bzw. zur Beobachtung der erwähnten magnetischen Material-Strukturen im atomaren Bereich ist ein federelastischer Taster mit einer magnetisch wirksamen Spitze, welche dicht über die Materialoberfläche geführt wird. Die Spitze kann als magnetischer Kraftsensor bzw. als Permanent- oder Elektromagnet zur Erzeugung magnetischer Felder ausgebildet sein. Der mit einer solchen Spitze versehene Taster wird mit Hilfe von extrem fein nachführbaren Positioniervorrichtungen bestimmten, vorgegebenen Abtastmustern folgend über die Oberfäche einer Probe, eines Substrats oder eines Werkstücks geführt.

Im folgenden wird zunächst eine Vorrichtung zur Erzeugung magnetischer Strukturen beschrieben. Dazu ist die Spitze des Tasters z.B. mit einem permanentmagnetischen Material versehen, welches relativ hohe Werte bezüglich Sättigungsmagnetisierung, und Koerzitivkraft aufweist. Geeignet für diese Zwecke ist z.B. FeNdB.

Die Magnetisierung des Probenmaterials an den gewünschten Stellen erfolgt durch gesteuertes Annähern der magnetischen Spitze bis dicht an die Oberfläche der Probe. Typische Distanzen, welche zur Erzeugung magnetischer Domänen der geschilderten Grössenordnung ausreichen, liegen im Nanometerbereich. Über nicht zu magnetisierende Bereiche wird die Spitze z.B. in einer Distanz geführt, welche kleiner ist als 100 nm. Anstelle der Erstmagnetisierung kann auch eine Ummagnetisierung solcher Bereiche vorgenommen werden.

Weist die Materialoberfläche bereits eine Strukturierung senkrecht zur Oberfläche auf, lassen sich magnetische Domänen durch Rastern in gleichmässiger Höhe herstellen. Gebiete, die beim Überstreichen einen geringen Abstand im nm-Bereich zur Spitze aufweisen, werden magnetisiert oder ummagnetisiert, während die Gebiete mit grösserem Abstand ihren ursprünglichen Magnetisierungszustand beibehalten. Ferner lassen sich auf entsprechende Weise bereits magnetisierte Bereiche wieder gezielt löschen.

Alternativ kann die Spitze des Tasters mit einem Elektromagneten versehen sein, der in konstantem Abstand über die zu magnetisierende Oberfläche geführt wird und dessen Wirkung durch gezieltes Einschalten an den gewünschten Stellen und durch Abschalten über den restlichen Bereichen gesteuert wird. Während der Einschaltphasen bilden sich direkt unter dem Elektromagnet die gewünschten magnetischen Domänen.

Die gleiche Vorrichtung kann ohne wesentliche Änderungen auch als Detektor verwendet werden. Es lassen sich damit magnetische Domänen erfassen, indem die Spitze koordinatengesteuert, z.B. rasterförmig, in gleichbleibendem Abstand über die Probe geführt wird und mit Hilfe eines Kraftsensors, der mit dem Taster verbunden ist, das Auftreten einer magnetischen Wechselwirkung zwischen dem Abtastmagneten und einer magnetischen Oberflächendomäne festgestellt wird. Das Beispiel eines für diese Anwendung geeigneten Kraftsensors wird später beschrieben.

Auf die gleiche Weise lassen sich topographische Strukturen von magnetischen Oberflächen abtasten. Wird der Taster in konstantem Abstand oder in anderweitig normiertem Abstand über die abzutastenden Bereiche geführt, erzeugen unterschiedliche Distanzen zur Oberfläche entsprechend unterschiedliche magnetische Wechselwirkungen, welche von einem Kraftsensor auf die gleiche Weise erfasst werden wie zuvor beschrieben.

Einzelheiten der als erstes Beispiel dargestellten Vorrichtung gemäss Fig. 1 werden im folgenden beschrieben. Auf einer Basis 30 sind Halterungen und Steuerungs- bzw. Messeinrichtungen für die drei Hauptbestandteile der Vorrichtung angebracht : Für eine Halterung 20 zur Aufnahme einer Probe oder eines Werkstücks 1, für einen Taster 2 mit einer magnetisch wirksamen Abtastspitze 3 und für eine Tunnelspitze 4.

Im einzelnen ist an einem Joch 8A, welches um eine Achse 9A schwenkbar ist, eine piezoelektrische Positioniereinrichtung 10A angebracht und an dieser wiederum die Halterung 20 für die Probe bzw. das Werkstück 1. Mit Hilfe der steuerbaren Positioniereinrichtung 10A wird eine mehrdimensionale Bewegung der Probe 1 gegenüber der Abtastspitze 3 erreicht, womit sich eine rasterförmige Führung der Probe 1 relativ zur Abtastspitze 3 durchführen lässt. Wegen der Feinheit der piezoelektrischen Positioniereinrichtung, deren Positionierbereich zwischen Nanometergrössenordnungen und einigen hundert Nanometern liegt, wird die Position der Probe 1 zusätzlich im Mikrometer-Bereich grob gesteuert. Dies erfolgt über das um seine Achse 9A hebelartig schwenkbare Joch 8A. Die Schwenkbewegung ist von einem Magnetantrieb 5A steuerbar, und zwar über einen Magnetanker 6A, der an seinem vorderen Teil eine keilförmige Ausbildung 7A aufweist. Durch impulsgesteuertes Vor- und Zurückgleiten des Ankers 6A wird das Joch 8A hebelartig um die Achse 9A geschwenkt. Durch diese Bewegung lässt sich die Probe oder das Werkstück 1 an die Spitze 3 grob annähern bzw. von dieser fort bewegen.

Die Tunnelspitze 4 ist über ein Piezoelement 10B hinsichtlich ihrer Distanz zur Abtastspitze 3 fein einstellbar. Auch an dieser Stelle erfolgt eine Grobeinstellung im Mikrometerbereich über ein zweites Joch 8B welches um eine zweite Achse 9B schwenkbar ist und von einem zweiten Magnetantrieb 5B über einen zweiten Magnetanker 6B steuerbar ist. Das Joch 8B wird durch einen Keil 7B am Anker 6B um seine Achse 9B geschwenkt.

Der Taster 2 ist an einem Halter 11 angebracht, welcher wiederum mit der Basis 30 verbunden ist. Die Teile 8A, 8B, 11 und 30 bestehen aus nichtmagnetischem Material, z.B. aus Aluminium. Die Permanentmagnete 6A und 6B sind im Beispiel aus Cobalt-Samarium gefertigt. Die Keile 7A und 7B bestehen im Beispiel aus Glaskeramik (z.B. "MACOR"). Die Feder 2 besteht z.B. aus einer rasch abgeschreckten Legierung ("Rapidly Quenched Metal"). Geeignet sind für diese Anwendung z.B. eine nanokristalline FeNdB oder eine glasartige FeBSiC Legierung. Es können auch kristalline Materialien, wie z.B. Nickel, oder Isolatoren, wie z.B. $SiO_2$ verwendet werden. Die Spitze 3 besteht aus weich- oder hartmagnetischem Material oder aus dem gleichen Material wie die Feder 2. Insbesondere können die Feder 2 und die Spitze 3 auch aus einem Stück gefertigt sein.

Die bei Annäherung der magnetischen Abtastspitze 3 an die Oberfläche der Probe 1 auftretenden Kräfte liegen bei Verwendung der angegenen Materialien in der Grössenordnung von $10^{-8}$ Newton. Diese Kräfte führen zu einer Auslenkung der Abtastspitze von einigen Angström, welche durch geregelte Nachführung der Tunnelspitze 4 relativ zur Abtastspitze 3 gemessen wird.

Die Keile 7A, 7B weisen im bevorzugten Beispiel eine Schräge von ca. 10 Grad auf. Die Antriebsimpulse für die Spulen wurden z.B. durch Spannungsimpulse von 15 Volt und einer pulsbreite von 150 μs erzeugt. Die typische Pulsfolgefrequenz lag zwischen 50 und 500 Hz. Eine kontrollierte Annäherung zwischen der Abtastspitze 3 und der Probe 1 kann auch mit Computer-gesteuerten Einzelimpulen durchgeführt werden.

Mit Hilfe einer der beschriebenen Positioniervorrichtungen lässt sich eine Annäherung der magnetisch wirksamen Spitze 3 gemäss Fig. 1 bis auf Bruchteile eines Nanometers an die Probe 1 erreichen. Soll ein Messvorgang eingeleitet werden, muss gleichzeitig die Tunnelspitze 4 bis in den Nanometerbereich an die Spitze 3 der Feder 2 angenähert werden. Dazu werden die Magnete 5A und 5B der Linearantriebe durch Strompulse aktiviert, so dass die keilförmigen Ankerspitzen 7A und 7B die Joche 8A und 8B auf die beschriebene Weise bewegen.

Die Bearbeitung grösserer Flächenelemente erfolgt durch Vorpositionieren der Probe im μm-Bereich mit Hilfe des elektromagnetischen Linearantriebs 5A, 6A und anschliessende Fein-Rasterung im nm-Bereich durch die piezoelektrische Positioniereinrichtung 10A. Entsprechend wird die Tunnelspitze 4 durch den zweiten elektromagnetischen Linearantrieb 5B, 6B im μm-Bereich vorpositioniert und durch das piezoelektrische Element 10B im nm-Bereich relativ zur Abtastspitze 3 gemäss den Betriebskriterien für ein Tunnelmikroskop fein nachgestellt.

Der gesamte Abtast-, Mess- und Regelvorgang der bisher beschriebenen Vorrichtung wird durch die im folgenden dargestellten Elemente unterstützt, die um einen zentralen Rechner 40 gruppiert sind und mit diesem zusammenwirken.

Die das Tunnelmikroskop betreffende Regelung erfolgt in einem Regelsystem 42, welches den Tunnelstrom $I_T$ zwischen der Tunnelspitze 4 und der Abtastspitze 3 laufend misst und ihn durch Nachregeln der Position der Tunnelspitze 4 über die Piezospannung $U_p$ für das Piezoelement 10B konstant hält. Aus diesem Nachführsignal wird das eigentliche Messsignal M abgeleitet, welches den Verlauf der zwischen der Abtastspitze 3 und der Oberfläche der Probe 1 auftretenden Kräfte bzw. die Information über die Höhe der Abtastspitze über der Materialoberfläche enthält. Dieses Signal wird dem Rechner 40 zugeführt und dort mit den Koordinatenwerten für den Verlauf der Rasterbewegung zwischen der Abtastspitze 3 und der Oberfläche der Probe 1 in Beziehung gebracht, so dass sich eine vollständige Darstellung des Kräfte- bzw. Höhenprofils auf der Probe 1 ergibt.

Zur Ableitung entsprechender koordinatenbezogener Piezospannungen $U_{px}$ und $U_{py}$ für die Steuerung der piezoelektrischen Positioniereinrichtung 10A zur rasterförmigen Abtastung der Probe 1 in X- und Y-Richtung dient eine Piezo-Steuerung 48. Die als Stellsignale ausgelegten Piezospannungen werden aus entsprechenden Steuersignalen abgeleitet, welche vom Rechner 40 geliefert werden.

Zur Steuerung der weiter oben erwähnten Grobpositionierung der Probe 1 bezüglich ihrer Höhendistanz zur Abtastspitze 3 mit Hilfe des elektromagnetischen Linearantriebs 5A, 6A, 7A, 8A, 9A ist eine Antriebssteuerung 44 vorgesehen, welche aus den vom Rechner 40 erhaltenen Signalen Stellsignale, vorzugsweise Stellimpulse, für die Magnetspule 5A ableitet.

Entsprechend ist zur Steuerung der oben erwähnten Grobpositionierung der Tunnelspitze 4 über den elektromagnetischen Linearantrieb 5B, 6B, 7B, 8B, 9B eine zweite Antriebssteuerung 46 vorgesehen, welche aus den vom Rechner 40 erhaltenen Signalen Stellsignale, vorzugsweise Stellimpulse, für die Magnetspule 5B ableitet.

Am Rechner 40 sind Ausgabe-Einrichtungen 50 angeschlossen zur Anzeige, zum Ausdrucken oder zum Abspeichern der erhaltenen Höhendistanz- oder Kräfteprofile bzw. der Positionen von magnetischen Domänen oder magnetischen oder magnetisch erfassten Strukturen.

## Ansprüche

1. Vorrichtung mit einer Tunnelmikroskop-Einrichtung zur rasterförmigen Abtastung einer Materialoberfläche durch einen Taster im Bereich atomarer Dimensionen, dadurch gekennzeichnet, dass der Taster (2) eine magnetisch wirksame Abtastspitze (3) zur Erzeugung und Detektion magnetischer Strukturen auf der Materialoberfläche aufweist, und dass steuerbare Bewegungs- und Positioniervorrichtungen (5-10) zum gegenseitigen Annähern zwischen Materialoberfläche (1) und der Abtastspitze (3) einerseits und der Abtastspitze (3) und einer Tunnelspitze (4) andererseits bis auf Nanometerdistanz vorgesehen sind.

2. Vorrichtung nach Anspruch 1, dadurch gekennzeichnet, dass an ein Regelsystem (42, 108, 4, 3) zur Nachführung der Position der Tunnelspitze (4) Messsignaleinrichtungen (42) zum Erfassen der relativen Auslenkung der Abtastspitze (3) gegenüber der Materialoberfläche (1) angeschlossen sind und dass den Messsignaleinrichtungen (42) ein Rechner (40) zur Zuordnung der Messwerte zu entsprechenden Abtastpositionen nachgeordnet ist, wobei die Abtastpositionen mit Steuersignalen für die Bewegungs- und Positioniervorrichtungen (5-10) in Beziehung stehen.

3. Vorrichtung nach Anspruch 1, dadurch gekennzeichnet, dass die magnetische Spitze (3) aus einem weich- oder hartmagnetischen Material besteht.

4. Vorrichtung nach Anspruch 1, dadurch gekennzeichnet, dass die magnetische Spitze (3) aus einem elektromagnetischen Induktionselement besteht.

5. Vorrichtung nach Anspruch 1, dadurch gekennzeichnet, dass die Spitze (3) und der federelastische Taster (2) aus einem Stück bestehen.

6. Vorrichtung nach Anspruch 1, dadurch gekennzeichnet, dass mindestens die Abtastspitze (3) aus einer schnell abgeschreckten Legierung, Rapidly Quenched Metall, besteht.

7. Vorrichtung nach Anspruch 1, dadurch gekennzeichnet, dass dass impulsgesteuert angetriebene Bewegungselemente (5A, 6A ; 5B, 6B) über mechanische Koppelglieder (7A, 7B ; 8A, 8B) mit dem Taster (2) in Verbindung stehen.

8. Vorrichtung nach Anspruch 7, dadurch gekennzeichnet, dass die mechanischen Koppelglieder (7A, 8A ; 7B, 8B) mit Mitteln (7-9) zur Weguntersetzung versehen sind.

9. Verfahren zum Betrieb einer Vorrichtung nach Anspruch 1, mit einem eine Abtastsitze (3) aufweisenden Taster (2), einer Bewegungs- und Positioniervorrichtung (5-8) zum Annähern der Abtastspitze (3) an die Materialoberfläche bis auf Nanometerdistanz und zum reproduzierbaren Erfassen der Positionen der genannten Strukturen, dadurch gekennzeichnet, dass die Abtastspitze (3) am Taster (2) durch die Bewegungs- und Positioniervorrichtungen rasterförmig über die Material- oberfläche geführt wird, dass während dieser Rasterbewegung die magnetische Wechselwirkung zwischen der Abtastspitze (3) und der Materialoberfläche gemessen und mit Koordinaten- werten für die Bewegungs- und Positioniersteuerung in Verbindung gebracht wird.

10. Verfahren nach Anspruch 9, dadurch gekennzeichnet, dass während der Rasterbewegung die von der Abtastspitze (3) ausgehende Magnetwirkung auf die Materialoberfläche in Abhängigkeit von der lateralen Position der Spitze auf der Materialoberfläche verändert wird.

11. Verfahren nach Anspruch 10, dadurch gekennzeichnet, dass die Magnetwirkung durch Verändern der Distanz zwischen der Spitze und der Materialoberfläche verändert wird.

12. Verfahren nach Anspruch 10, dadurch gekennzeichnet, dass die Magnetwirkung der Spitze auf die Materialoberfläche durch gezieltes Verändern der von der Spitze ausgehenden elektromagnetischen Wirkung verändert wird.

**Claims**

1. An arrangement with a tunnel microscope device for the raster-type scanning of a material surface using a scanner in the atomic dimensions region, characterised in that the scanner (2) has a magnetically operating scanning tip (3) for generating and detecting magnetic structures on the material surface, and in that controllable moving and positioning arrangements (5-10) are provided so that on the one hand the material surface (1) and the scanning tip (3) and on the other the scanning tip (3) and a tunnel tip (4) can be moved closer together up to a nanometer apart.

2. An arrangement according to claim 1, characterised in that measuring signal devices (42) for detecting the relative deflection of the scanning tip (3) in relation to the material surface (1) are connected to a regulating system (42, 10B, 4, 3) for resetting the position of the tunnel tip (4), and in that a computer (40) for associating the measurements with corresponding scanning positions is arranged after the measuring signal devices (42), the scanning positions correlating with control signals for the moving and positioning arrangements (5-10).

3. An arrangement according to claim 1, characterised in that the magnetic tip (3) consists of a soft or hard magnetic material.

4. An arrangement according to claim 1, characterised in that the magnetic tip (3) comprises an electromagnetic induction element.

5. An arrangement according to claim 1, characterised in that the tip (3) and the resilient scanner (2) are in one piece.

6. An arrangement according to claim 1, characterised in that at least the scanning tip (3) consists of a rapidly quenched alloy.

7. An arrangement according to claim 1, characterised in that movement elements (5A, 6A ; 5B, 6B) driven by pulse control are connected to the scanner (2) via mechanical coupling members (7A, 7B ; 8A, 8B).

8. An arrangement according to claim 7, characterised in that the mechanical coupling members (7A, 7B ; 8A, 8B) are provided with means (7-9) of gearing down.

9. A method of operating an arrangement according to claim 1, with a scanner (2) having a scanning tip (3), with a moving and positioning arrangement (5-8) for moving the scanning tip (3) closer to the material surface up to a nanometer's distance away and for the reproducible detection of the positions of the said structures, characterised in that the scanning tip (3) on the scanner (2) is guided in the form of a raster over the material surface by the moving and positioning arrangements, and in that during this raster movement, the magnetic reciprocal effect between the scanning tip (3) and the material surface is measured and linked to co-ordinates for the moving and positioning control.

10. A method according to claim 9, characterised in that during the raster movement, the magnetic effect on the material surface and emanating from the scanning tip (3) is changed depending on the lateral position of the tip on the material surface.

11. A method according to claim 10, characterised in that the magnetic effect is changed by changing the distance between the tip and the material surface.

12. A method according to claim 10, characterised in that the magnetic effect of the tip on the material surface is changed by purposeful alteration of the electromagnetic effect emanating from the tip.

## Revendications

1. Dispositif avec un système de microscope tunnel pour l'exploration en forme de trame d'une surface de matière au moyen d'un palpeur dans le domaine des dimensions atomiques, **caractérisé en ce** que le palpeur (2) comprend une pointe d'exploration (3) pour la génération et la détection de structures magnétiques sur la surface de matière, et qu'il est prévu des dispositifs de déplacement et de positionnement commandables (5 à 10) pour le rapprochement mutuel entre la surface de matière (1) et la pointe d'exploration (3) d'une part et la pointe d'exploration (3) et une pointe tunnel (4) d'autre part jusqu'à une distance de l'ordre du nanomètre.

2. Dispositif selon la revendication 1, caractérisé en ce qu'à un système de réglage (42, 10B, 4, 3) pour la correction de la position de la pointe tunnel (4) sont raccordés des dispositifs de signaux de mesure (42) pour la détection de la déviation relative de la pointe d'exploration (3) par rapport à la surface de matière (1), et que les dispositifs de signaux de mesure (42) sont suivis d'un calculateur (40) pour l'association des valeurs mesurées à des positions d'exploration correspondantes, les positions d'exploration étant en relation avec des signaux de commande pour les dispositifs de déplacement et de positionnement (5 à 10).

3. Dispositif selon la revendication 1, caractérisé en ce que la pointe magnétique (3) est réalisée à partir d'un alliage magnétique tendre ou dur.

4. Dispositif selon la revendication 1, caractérisé en ce que la pointe magnétique (3) est constituée par un élément inducteur électromagnétique.

5. Dispositif selon la revendication 1, caractérisé en ce que la pointe (3) et le palpeur (2) à déformation sont réalisés en une seule pièce.

6. Dispositif selon la revendication 1, caractérisé en ce qu'au moins la pointe d'exploration (3) est réalisée à partir d'un alliage refroidi brusquement, Rapidly Quenched Metal.

7. Dispositif selon la revendication 1, caractérisé en ce que des éléments de mouvement entraînés (5A, 6A ; 5B, 6B) commandés par impulsions sont reliés par l'intermédiaire d'éléments de couplage mécaniques (7A, 7B ; 8A, 8B) au palpeur (2).

8. Dispositif selon la revendication 7, caractérisé en ce que les éléments de couplage mécaniques (7A, 8A ; 7B, 8B) comprennent des moyens (7 à 9) pour la démultiplication des parcours.

9. Procédé pour la mise en oeuvre d'un dispositif selon la revendication 1, comprenant un palpeur (2) muni d'une pointe d'exploration (3), un dispositif de déplacement et de positionnement (5 à 8) pour le rapprochement de la pointe d'exploration (3) et de la surface de matière jusqu'à une distance nanométrique et pour la détection reproductible des positions de structures mentionnées, **caractérisé en ce** que la pointe d'exploration (3) sur le palpeur (2) est guidée en forme de trame sur la surface de matière par les dispositifs de déplacement et de positionnement ; que l'interaction magnétique entre la pointe d'exploration (3) et la surface de matière est mesurée pendant ce mouvement de balayage et mise en relation avec des valeurs de coordonnées pour la commande de déplacement et de positionnement.

10. Procédé selon la revendication 9, caractérisé en ce que pendant le mouvement de balayage l'effet magnétique exercé par la pointe d'exploration (3) sur la surface de matière est varié en fonction de la position latérale de la pointe sur la surface de matière.

11. Procédé selon la revendication 10, caractérisé en ce que l'effet magnétique est modifié par la variation de la distance entre la pointe et la surface de matière.

12. Procédé selon la revendication 10, caractérisé en ce que l'effet magnétique de la pointe sur la surface de matière est modifié par la variation dirigée de l'action électromagnétique exercée par la pointe.

48

40

50

$U_{P_x}$   $U_{P_y}$   42   M

3   $I_T$   $U_P$

8A   1   8B

10A

20   2   4   10B

44   11

5A   9A   9B   5B
6A   6B

7A   7B   30

Fig. 1

EP 0 290 522 B1